# EUROPEAN PATENT APPLICATION

(11) **EP 4 614 332 A1**
(43) Date of publication of application: **10.09.2025**
(21) Application number: 24861333.3
(22) Date of filing: 18.01.2024
(51) Int. Cl.: G06F 11/20

(54) **CODE PROCESSING SYSTEM AND CODE PROCESSING METHOD**

(71) Applicant: Rakuten Group, Inc., Tokyo 158-0094 (JP)
(72) Inventor: PAULO, Fernando de Araujo, Tokyo 108-0075 (JP); BZIKADZE, Aleksandr, Tokyo 108-0075 (JP); WADHWANI, Gurnur Mahendra, Tokyo 108-0075 (JP); VEMULA, Sai Siddartha, Bengaluru, Karnataka 560027 (IN); TSANG, Yuen Kwan, Tokyo 108-0075 (JP)
(74) Representative: EIP
(86) International application number: PCT/JP2024/001288
(87) International publication number: WO 2025/154235

(57) **Abstract**

A code processing system (100) includes an active system (30) and a standby system (40). Each of the active system (30) and the standby system (40) is configured to generate a multi-digit user code (12) upon receiving a code request from a user terminal 11. The user code (12) includes, in a specified digit, a system code unique to the system 30 or 40 that generates the user code (12). The user code (12) generated by the active system (30) is an active system code. The user code (12) generated by the standby system (40) is a standby system code. The code processing system (100) is configured to transmit either the active system code or the standby system code to the user terminal 11 based on error information in the active system 30.

## Description

### TECHNICAL FIELD

The present disclosure relates to a code processing system and a code processing method.

### BACKGROUND

In recent years, electronic payment services such as code-based payments have become widely available. When the information system providing such electronic payment services experiences a failure, it can significantly impact societal activities and undermine trust in the service. To mitigate the effects of such information system failures, cluster systems equipped with active servers, which operate under normal conditions, and standby servers, which take over in case of active server failure, have been employed.

For instance, Patent Literature 1 discloses a server switching method that collects signs of hardware or software failures and switches to a standby server as needed.

### CITATION LIST

### Patent Literature

Patent Literature 1: Japanese Laid-Open Patent Publication No. 2016-224490

### SUMMARY OF INVENTION

### Technical Problem

In code-based payment services, identification information for identifying shoppers and merchants is issued as user codes, such as barcodes or QR codes^{®}. For example, a shopper displays a user code on the shopper's mobile device, and the merchant uses a store terminal to read the user code. The store terminal then transmits the read user code along with the merchant's identification code (store code) to a settlement system. The settlement system identifies the shopper and the merchant based on the received user code and store code, and executes a settlement process between the two parties. Identification codes such as user codes do not have to be used for electronic payments, and may be used for distributing coupons or managing entry as electronic tickets.

When multiple systems, such as active and standby systems, generate identification codes for the same purpose, these systems may generate the same identification code depending on the switching status between the systems. If an identification code, which should be unique, is distributed in multiple instances, it may cause issues in the settlement process.

It is an objective of the present disclosure to provide a code processing system and a code processing method capable of correctly executing code processing even when switching between systems generating identification codes.

### Solution to Problem

A code processing system according to an aspect of the present disclosure includes an active system and a standby system. Each of the active system and the standby system is configured to generate a multi-digit identification code upon receiving a code request from a user terminal. The identification code includes, in a specified digit, a system code unique to a system that generates the identification code. The identification code generated by the active system is an active system code. The identification code generated by the standby system is a standby system code. The code processing system is configured to transmit either the active system code or the standby system code to the user terminal based on error information in the active system.

A code processing system according to an aspect of the present disclosure includes an active system, one or more standby systems, and a database. Each of the active systems and the one or more standby systems is configured to generate a multi-digit identification code upon receiving a code request from a user terminal. The identification code includes, in a specified digit, a system code unique to each of the active system and the one or more standby systems generating the identification code. The database is configured to store a transmission history of the identification code generated by each of the active system and the one or more standby systems. The code processing system is configured to transmit, to the user terminal, the identification code generated by either the active system or one of the one or more standby system, based on error information in the active system, and, upon receiving a code processing request including the identification code, transmit the code processing request to a system, among the active system and the one or more standby systems, corresponding to the system code included in the identification code. Each of the active system and the one or more standby systems is configured to execute a comparison process between an identification code included in the code processing request and an identification code stored in the database upon receiving the code processing request.

A method according to an aspect of the present disclosure is a code processing method for a code processing system that includes an active system and one or more standby systems. Each of the active system and the one or more standby systems is configured to generate a multi-digit identification code. The identification code includes, in a specified digit, a system code unique to each of the active system and the one or more standby system. The method includes collecting error information in the active system, receiving a code request from the user terminal, and transmitting, to the user terminal, the identification code generated by either the active system or one of the one or more standby system, based on error information in the active system.

### BRIEF DESCRIPTION OF DRAWINGS

Fig. 1 is a schematic diagram illustrating the configuration of a code processing system according to an embodiment.
Fig. 2 is a flowchart illustrating the code processing method executed by the code processing system shown in Fig. 1.
Fig. 3 illustrates error information.
Fig. 4 is a flowchart illustrating the method for system switching based on the error information.

### DESCRIPTION OF EMBODIMENTS

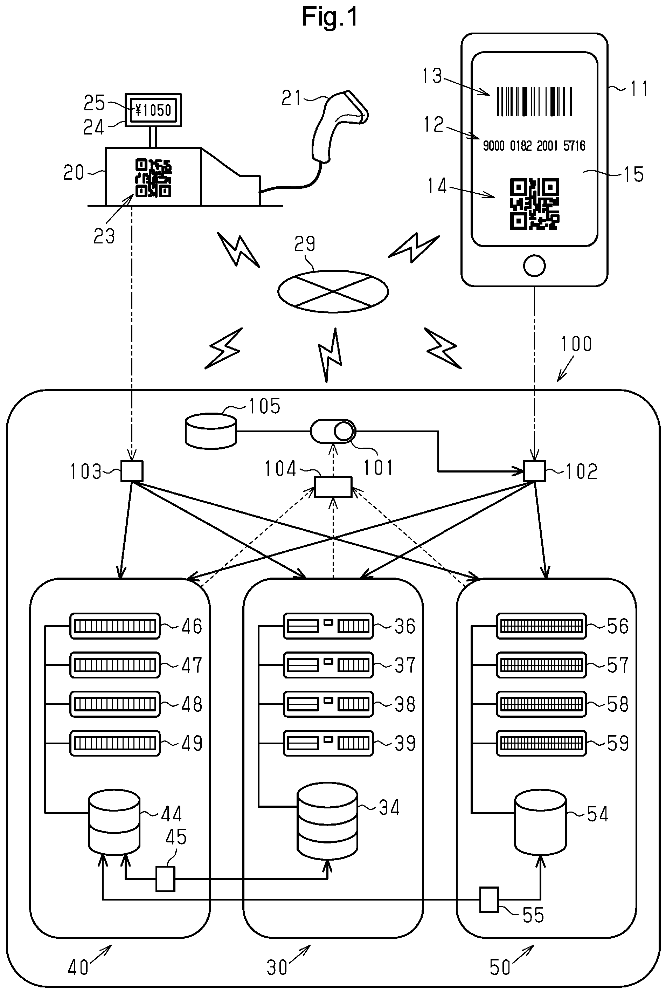

Examples of a code processing system 100 and a code processing method will now be described with reference to Figs. 1 to 4. The present invention is not limited to those exemplified and is shown by the scope of the claims. It is intended to include all modifications within the meaning and range equivalent to the scope of the claims.

### Overview of Electronic Payment Service

Referring to Fig. 1, the code processing system 100 is configured to generate an identification code as code processing associated with electronic payment (hereinafter referred to simply as code-based payment). A shopper, which is an example of a user, can use a user terminal 11 to access electronic payment services. The user terminal 11 may have a payment application installed for making payments through electronic payment services. Examples of the user terminal 11 include, but are not limited to, a mobile terminal (e.g., a smartphone or a tablet) that incorporates a computer and a camera.

The payment application includes a computer program that enables the user terminal 11 to execute various operations. When the user activates the payment application, the user terminal 11 displays a code display screen 15. The code display screen 15 displays one or more identification codes 12, 13, and 14. The identification codes 12, 13, and 14 displayed on the code display screen 15 are also referred to as user codes. The user codes 12, 13, and 14 may be generated each time the payment application is activated. Alternatively, they may be regenerated by reloading identification codes (operating a reload button) or by refreshing the code display screen 15. As another option, they may have a valid time (for example, five minutes).

Of the user codes 12, 13, and 14, the identification code 12 is a multi-digit string code including at least one of numbers, letters, or symbols. Any number of digits in the string can be set. The identification codes 13 and 14 are two-dimensional codes. The two-dimensional codes 13 and 14 may be a barcode 13 and a QR code^{®} 14, but are not limited thereto. The two-dimensional codes 13 and 14 are generated by converting the identification code 12 into a two-dimensional code. Therefore, when the code display screen 15 is scanned, the expression "read(s) the user code 12" is used even if the two-dimensional code 13 or 14 is scanned.

A merchant terminal 20, which is used by a merchant, may include a code scanner 21 that scans the two-dimensional codes 13 and 14, or may include a camera that captures images and an application for code reading. The merchant terminal 20 is pre-assigned a store code 23, which is an identification code for identifying the merchant. The store code 23 may be a two-dimensional code. The two-dimensional code may be a barcode or a QR code, but it is not limited thereto. The user terminal 11 and the merchant terminal 20 are examples of user terminals.

Merchant terminals 20 may be installed in a store or may be mounted on a mobile unit (e.g., a taxi or a mobile vending vehicle). Each merchant terminal 20 may be a point-of-sale (POS) cash register, or a mobile device (e.g., a PC or a tablet) with a payment application installed.

Code-based payment can be performed using either a store-scan method, where the merchant terminal 20 scans the two-dimensional codes 13 and 14 displayed on the code display screen 15, or a user-scan method, where the user terminal 11 scans the store code 23 presented by the merchant. In the store-scan method, a settlement process (hereinafter referred to as a first settlement process) is executed in response to a settlement request transmitted from the merchant terminal 20, which receives a payment via the electronic payment. In the user-scan method, a settlement process (hereinafter referred to as a second settlement process) is executed in response to a payment request transmitted from the user terminal 11, which makes a payment via the electronic payment.

The overview of the code-based payment in the store-scan method executed by the user terminal 11 and the merchant terminal 20 will now be described. Prior to the settlement, a payment screen 25 is displayed on the display 24 of the merchant terminal 20. The payment screen 25 shows the payment amount. After both the merchant and the user confirm the payment amount, the merchant terminal 20 reads the user code 12. After reading the code, the merchant terminal 20 executes a payment process.

After executing the payment process, the merchant terminal 20 transmits a settlement request including settlement information to the code processing system 100 via a network 29. The settlement information includes the user code 12, the store code 23, and the settlement amount. The settlement information may further include transaction information related to the settlement (e.g., information related to a purchased product). After the settlement is completed, the payment application of the user terminal 11 may display a settlement completion screen (not shown) on the user terminal 11. The settlement completion information may include the merchant information, the payment date and time, and the settlement amount.

The network 29 includes, for example, the Internet, a wide area network (WAN), a local area network (LAN), a provider terminal, a wireless communication network, a wireless base station, and a dedicated line. All the combinations of the devices shown in Fig. 1 do not necessarily have to communicate with one another. The network 29 may partially include a local network.

In the user-scan method, when the user reads the store code 23 on the user terminal 11, the user terminal 11 displays a payment screen (not shown). When the user enters a payment amount on the payment screen and performs a payment process, the user terminal 11 transmits a settlement request including settlement information to the code processing system 100 via the network 29. The settlement information includes the user code 12, the store code 23, and the settlement amount.

### Overview of Code Processing System

As shown in Fig. 1, the code processing system 100 is a cluster system that includes an active system 30, which operates under normal conditions and a standby system 40, which operates in the event of a failure of the active system 30. In addition to the first standby system 40, the code processing system 100 may include a second standby system 50, which operates in the event of failures in the systems 30 and 40.

The systems 30, 40, and 50 are configured to execute, as code processing for code-based payment, generation of an identification code (first code processing) and comparison between identification codes (second code processing). The first code processing includes a process that transmits a generated identification code. The second code processing may include a process related to service using an identification code (e.g., a settlement process). The systems 30, 40, and 50 are configured to generate and transmit an identification code (user code 12) upon receiving a code request (first code processing request). The systems 30, 40, and 50 are configured to execute comparison between identification codes and the settlement process upon receiving a settlement request (second code processing request).

The systems 30, 40, and 50 may be capable of providing the same services, or their service contents may differ. Hereinafter, an example in which the standby systems 40 and 50 are configured to provide some of the services that can be provided by the active system 30 will be described. For instance, the active system 30 is capable of executing code-based payments where the merchant terminal 20 serves as a vending machine or a self-checkout terminal, in addition to code-based payments (first settlement process and second settlement process) using the user-scan method and the store-scan method. The standby systems 40 and 50 are capable of executing code-based payments using the store-scan method (first settlement process), but they do not support the user-scan method, vending machine payments, or self-checkout terminal payments.

Regardless of any type of code-based payment, the systems 30, 40, and 50 generate a user code 12 and send it to the user terminal 11 in response to a code request transmitted from the user terminal 11. The payment application is configured to generate two-dimensional codes 13 and 14 from the user code 12. The user code 12 is, for example, a sixteen-digit positive integer sequence. In the sixteen-digit number sequence, the code for a specified digit (in this example, the seventh digit; in Fig. 1, the seventh number from the left) differs depending on the system 30, 40, or 50 that generates the code. The seventh code specific to the systems 30, 40, or 50 is referred to as a system code.

In this example, the system code used to identify the active system 30 is 8 or 9, the system code used to identify the first standby system 40 is 7, and the system code used to identify the second standby system 50 is 6. That is, the seventh digit of the user code 12 generated by the active system 30 is 8 or 9, the seventh digit of the user code 12 generated by the first standby system 40 is 7, and the seventh digit of the user code 12 generated by the second standby system 50 is 6. The system code is not limited to a number and may also be a digit or a symbol.

The user code 12 generated by the active system 30 is referred to as an active system code or a normal code. The user code 12 generated by the first standby system 40 is referred to as a first standby system code or a first emergency code. The user code 12 generated by the second standby system 50 is referred to as a second standby system code or a second emergency code. The first standby system code and the second standby system code may be collectively referred to as a standby system code. The first emergency code and the second emergency code may be collectively referred to as an emergency code.

The system 100 may include a switcher 101 configured to switch between the systems 30, 40, and 50. Alternatively, the system 100 may include a first switcher that switches from the system 30 to the system 40 and a second switcher that switches from the system 40 to the system 50. The state in which the active system 30 is operating is referred to as a normal mode. The state in which the standby system 40 or 50 is operating is referred to as an emergency mode.

The system 100 may include a user router 102 and a merchant router 103. The user router 102 is configured to transmit, upon receiving a code request transmitted from the user terminal 11, the code request to the system 30, 40, or 50. The switcher 101 specifies whether the user router 102 transmits a code request to the system 30, 40, or 50.

Upon receiving a settlement request including the user code 12 transmitted from the user terminal 11, the user router 102 transmits the settlement request to the system 30, 40, or 50 that corresponds to the system code included in the user code 12. That is, the user router 102 transmits a settlement request to the system 30 when the user code 12 is a normal code, transmits a settlement request to the system 40 when the user code 12 is a first emergency code, and transmits a settlement request to the system 50 when the user code 12 is a second emergency code.

Upon receiving a settlement request including the user code 12 transmitted from the merchant terminal 20, the merchant router 103 transmits the settlement request to the system 30, 40, or 50 that corresponds to the system code included in the user code 12. That is, in the same manner as the user router 102, the merchant router 103 transmits a settlement request to the system 30 when the user code 12 is a normal code, transmits a settlement request to the system 40 when the user code 12 is a first emergency code, and transmits a settlement request to the system 50 when the user code 12 is a second emergency code.

The system 100 may include an error information collector 104 that collects error information for each of the systems 30, 40, and 50. Instead, the system 100 may include a first error information collector, a second error information collector, and a third error information collector that collect the error information related to the systems 30, 40, and 50, respectively. The error information collector may be a chatbot configured to receive error information transmitted from a device in the system 100.

While each of the systems 30, 40, and 50 is operating, the error information collector 104 collects the error information in the corresponding system 30, 40, or 50. The error information includes the number of errors, the contents of errors, and the date and time when an error occurred in various processes executed by each of the systems 30, 40, and 50.

The switcher 101 is configured to control switching between the systems 30, 40, and 50 from the error information collected by the error information collector 104. The systems 30, 40, and 50 are switched by the switcher 101 changing the transmission destination of a code request received by the user router 102 from the user terminal 11. For example, in a case in which an error satisfying a specified switching condition has occurred in the active system 30, the switcher 101 causes the user router 102 to change the transmission destination of a code request from the active system 30 to the first standby system 40. The system 100 may include a history database 105 that stores the history of switching between the systems 30, 40, and 50.

### Overview of Electronic Payment System

The code processing system 100 of this example is configured to provide electronic payment services and is thus referred to an electronic payment system. The configurations of the systems 30, 40, and 50 enabling various features of the electronic payment system 100 will now be described.

The systems 30, 40, and 50 may include databases 34, 44, and 54, respectively. The first standby system 40 may include a first data synchronization device 45 that synchronizes the active database 34 with the first standby database 44. The first data synchronization device 45 may synchronize the active database 34 with the first standby database 44 in the event of a switch between the systems 30 and 40. The second standby system 50 may include a second data synchronization device 55 that synchronizes the first standby database 44 with the second standby database 54. The second data synchronization device 55 may synchronize the first standby database 44 with the second standby database 54 in the event of a switch between the systems 40 and 50.

The databases 34, 44, and 54 may each include a user database, a merchant database, a code database, and a settlement database. The user database stores information (hereinafter referred to as user data or user's data) related to users (shoppers) that have registered the settlement service. The merchant database stores various types of data related to merchants or stores that are affiliated with the electronic payment service. The code database stores the transmission history of the user code 12 generated by each of the systems 30, 40, and 50. The settlement database stores the history of payment processes.

Each user's data may include the corresponding user's name, user identifier, postal address, one or more payment details, payment method settings, and usage history of the electronic payment service. The one or more payment details include, for example, credit card numbers, bank account details for direct debit, and registered electronic money details. The payment method settings include information related to the payment method preconfigured by the user to be used by default in code-based payments (e.g., a credit card number). Examples of payment methods include, but are not limited to, credit cards, bank accounts, electronic money, or reward points. Each user's data may include information related to the user terminal 11 used by the user.

Examples of the information related to a merchant include, but are not limited to, the name of the merchant, merchant identification information (including store identification information), the location, business contents, categories of products and services offered, and information related to the merchant terminal 20. The merchant database may include a settlement history. Examples of the settlement history include the name of the store where the settlement was made, the purchaser, the settlement date and time, transaction items, and the settlement amount.

The transmission history of each user code 12 includes the transmission target (the user or the information related to the user terminal 11) and the transmission date and time of the user code 12. Examples of the settlement process history may include user identification information for each settlement process, merchant identification information (store identification information), the user code 12 used for the settlement, store information, settlement date and time, settlement location, settlement amount, payment method, transaction details, and the status of withdrawals after the settlement process.

Each of the active system 30 and the standby systems 40 and 50 is configured to execute, as the second code processing, a process that compares the user code 12 included in the second code processing request and a transmitted user code 12 stored in the code database upon receiving the second code processing request (settlement request) including a user code 12.

The active system 30 includes an authenticator 36, a configuration device 37, a code generator 38, and a settlement processing device 39. The authenticator 36 is configured to execute, upon receiving a code request from the user terminal 11, user authentication for the user who has sent the code request with reference to the user database. The configuration device 37 is configured to obtain, for the authenticated user, the payment method set by the user with reference to the active database 34.

The code generator 38 is configured to generate the user code 12 of the corresponding user based on the code request. The settlement processing device 39 is configured to execute a settlement process upon receiving a settlement request from the user terminal 11 or the merchant terminal 20.

The first standby system 40, in the same manner as the active system 30, includes an authenticator 46, a configuration device 47, a code generator 48, and a settlement processing device 49. The features of the authenticator 46, the configuration device 47, the code generator 48, and the settlement processing device 49 are the same as those of the configuration device 37, the code generator 38, and the settlement processing device 39, respectively. While the settlement processing device 49 executes a payment process upon receiving a settlement request from the merchant terminal 20, the settlement processing device 49 does not respond to a settlement request (second settlement process) from the user terminal 11.

The second standby system 50, in the same manner as the active system 30, includes an authenticator 56, a configuration device 57, a code generator 58, and a settlement processing device 59. The features of the authenticator 56, the configuration device 57, the code generator 58, and the settlement processing device 59 are the same as those of the configuration device 37, the code generator 38, and the settlement processing device 39, respectively. While the settlement processing device 59 executes a payment process upon receiving a settlement request from the merchant terminal 20, the settlement processing device 59 does not respond to a settlement request (second settlement process) from the user terminal 11.

### Method for Code-Based Payment

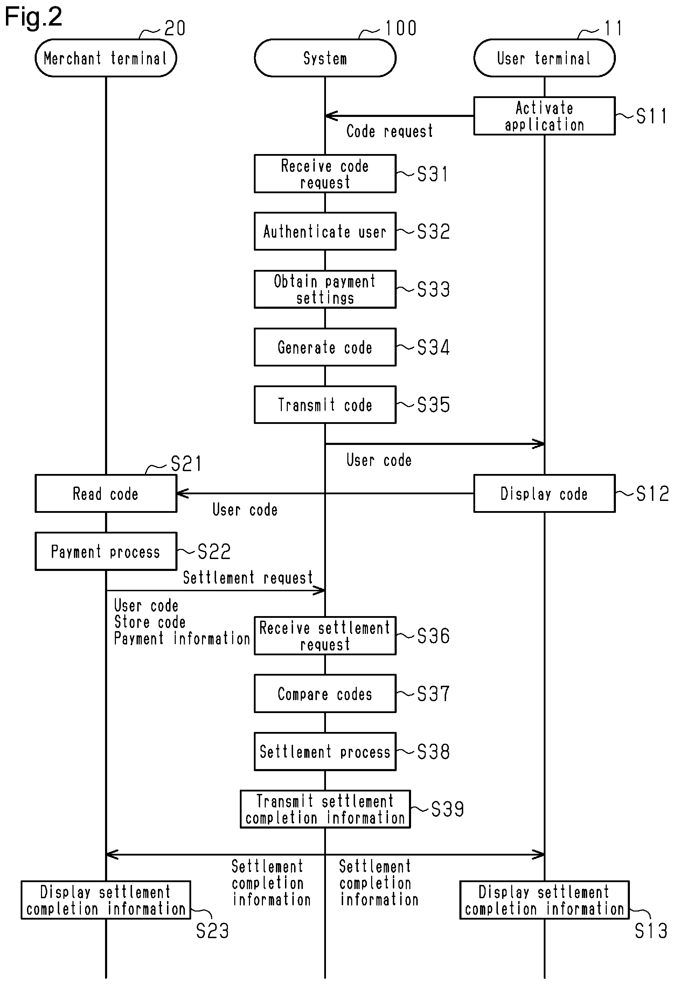

The method for code-based payment with the systems 30, 40, and 50 will now be described with reference to Fig. 2, using as an example of the code-based payment with the store-scan method by the active system 30. The process executed by the user terminal 11 is shown in steps S11 to S13, the process executed by the merchant terminal 20 is shown in steps S21 to S23, and the process executed by the system 100 is shown in steps S31 to S39.

First, in step S11, the user operates the user terminal 11 to activate the payment application. This causes the payment application to transmit a code request including user data to the system 100. Then, in step S31, the user router 102 receives the code request from the user terminal 11. In this example, the user router 102 transmits the code request to the authenticator 36 of the active system 30.

In step S32, the authenticator 36 executes a user authentication process by comparing the user data included in the code request (first code processing request) with the user data (registered data) stored in the user database. When the user data matches the registered data, the authenticator 36 completes the user authentication. When the user data does not match the registered data or when the authentication request is invalid and authentication is impossible, the authenticator 36 transmits error information. In the event of an error, the authenticator 36 may retry the authentication process.

In step S33, the configuration device 37 refers to the database 34 to obtain the payment method set by the corresponding user. When the payment method cannot be obtained or when the payment information request is invalid and the payment method cannot be obtained, the configuration device 37 transmits error information. In the event of an error, the configuration device 37 may retry the process that obtains the payment method.

In step S34, the code generator 38 generates the user code 12 (first code processing). Then, in step S35, the active system 30 transmits the generated user code 12 to the user terminal 11. When the code generation process cannot be executed in step S34, the code generator 38 transmits error information. In the event of an error, the code generator 38 may retry the generation process.

In step S12, when the user terminal 11 receives the user code 12, the payment application generates the two-dimensional codes 13 and 14 and then causes the user terminal 11 to display the code display screen 15 including the user codes 12, 13, and 14.

Subsequently, the merchant enters the settlement amount into the merchant terminal 20. Then, in step S21, the merchant terminal 20 reads the user code 12 displayed on the code display screen 15. Next, in step S22, the merchant executes the payment process. As a result, the merchant terminal 20 transmits a settlement request (second code processing request) to the system 100. The settlement request includes payment information. The payment information includes at least the user code 12 obtained from the user terminal 11, the store code 23, and the payment amount. The store code 23 scanned by the user terminal 11 in the settlement of the user-scan method may be different from the store code 23 included in the payment information in the settlement of the store-scan method.

In step S36, the merchant router 103 receives the settlement request. Since the user code 12 in this example is a normal code, the merchant router 103 transmits the settlement request to the authenticator 36 of the active system 30.

In step S37, the authenticator 36 compares the user code 12 included in the settlement request with the transmitted user code 12 stored in the code database. In this manner, the active system 30 is configured to execute the comparison process for the user code 12 with reference to the database 34 upon receiving the second code processing request including the user code 12. When the comparison result indicates that the two user codes 12 match, the authenticator 36 completes the comparison process. When the two user codes 12 do not match, the authenticator 36 transmits error information. In the event of an error, the authenticator 36 may retry the comparison process.

In step S38, the settlement processing device 39 executes the settlement process based on the payment information. When the settlement process cannot be executed in step S38, the settlement processing device 39 transmits error information. In the event of an error, the settlement processing device 39 may retry the settlement process.

Upon completion of the settlement process, in step S39, the active system 30 transmits the result of the settlement process as settlement completion information to the user terminal 11 and the merchant terminal 20. Then, in step S13, the payment application causes the user terminal 11 to display the settlement completion screen, which includes the settlement completion information. Further, in step S23, the display 24 of the merchant terminal 20 displays the settlement completion screen, which includes the payment completion information.

In the code-based payment using the user-scan method, in the same manner as the store-scan method described above, when the payment application on the user terminal 11 is activated in step S11, a code request is transmitted to the system 30. Upon receiving the code request (step S31), the system 30 executes the authentication process (step S32), the payment method obtaining process (step S33), and the code generation process (step S34). Subsequently, the generated user code 12 is transmitted to the user terminal 11 (step S35). As a result, in step S12, the code display screen 15 is displayed on the user terminal 11.

Then, in the user-scan method, instead of step S21, the user terminal 11 reads the store code 23. Further, instead of step S22, a settlement request is sent from the user terminal 11 to the system 30. The subsequent processes (step S36 to S39, S13, and S23) are executed in the same manner as the store-scan method.

At least part of the error information transmitted within the systems 30, 40, and 50 may be, for example, a hypertext transfer protocol (HTTP) status code. For instance, status codes in the 400 series represent errors caused by client-side actions or issues, and are denoted as "4XX." Similarly, status codes in the 500 series represent errors caused by server-side failures, and are denoted as "5XX." For instance, "500" indicates an error that has occurred within the server, while "503" indicates an error where the server is unavailable. Such error information is collected by the error information collector 104.

### System Switching Condition

The switcher 101 may execute system switching based on error information related to a system that is currently operating (normally, the active system 30). The error information may include the number of errors that occur during various processes. Examples of the error information include at least one of the number of generation errors that occur during the code generation process, which generates a user code 12, the number of authentication errors that occur during the authentication process (including the comparison process), or the number of settlement errors that occur during the settlement process. Settlement errors may occur due to issues on the user side making the payment or on the merchant side receiving the payment.

The number of errors may be recorded by the error information collector 104. The system switching condition that is based on error information may be stored in at least one of the database 34, 44, or 54 or the history database 105.

The switching condition may include threshold values for the number of times an error has occurred. In this case, the code processing system 100 may be configured to transmit either an active system code or a standby system code to the user terminal 11 based on threshold values for the number of times an error has occurred. The threshold values may include a warning threshold value (first threshold value) and a switching threshold value (second threshold value). The warning threshold value is a condition for determining that a failure is beginning to occur in the corresponding system 30 or 40. The switching threshold value is a condition for executing system switching.

The switcher 101 may be configured to automatically switch the system in a case in which an error exceeding the switching threshold value has occurred. Alternatively, the error information collector 104 may be configured to notify the manager of the system 100 in a case in which an error exceeding the warning threshold value and the switching threshold value has occurred. In this case, the manager may manually switch the system.

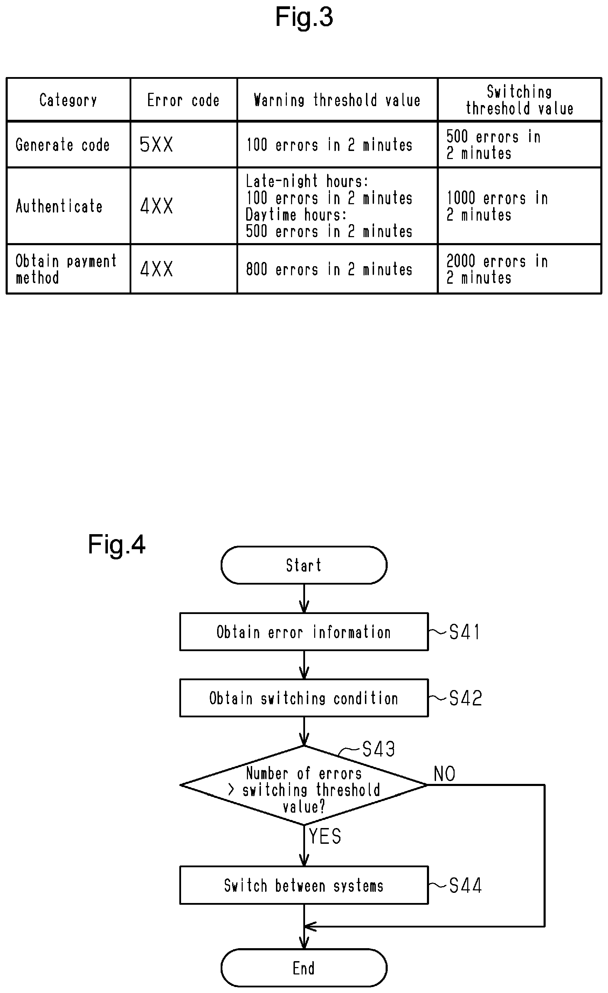

Fig. 3 illustrates the warning threshold value and the switching threshold value for the system. In Fig. 3, the error codes are represented by HTTP status codes. For example, in the code generation process, the warning threshold value may be set to 100 errors in 2 minutes, and the switching threshold value may be set to 500 errors in 2 minutes.

Multiple threshold values may each be set for a different time of day. For example, a different warning threshold value or a different switching threshold value may be set depending on the time of day. In the example shown in Fig. 3, during the authentication process, the warning threshold value is set to 100 errors in 2 minutes for late-night hours, when the frequency of code-based payments is relatively low, and the warning threshold value is set to 500 errors in 2 minutes during daytime hours, when the frequency of code-based payments is relatively high. Similarly, the switching threshold value may be varied depending on the time of day. Instead, as shown in Fig. 3, the same switching threshold value (e.g., 1000 errors in 2 minutes) may be set during the authentication process.

As another option, a different warning threshold value or a different switching threshold value may be set based on the likelihood of errors occurring. For example, when the payment method obtaining process is more prone to errors than the code generation process and the authentication process, the payment method obtaining process may be designed to allow a greater number of errors compared to the code generation process and the authentication process. For example, the warning threshold value may be set to 800 errors in 2 minutes, and the switching threshold value may be set to 2000 errors in 2 minutes.

Multiple threshold values may include one or more management threshold values. The management threshold value may be the number of times an error has occurred during a series of processes associated with a request from the manager terminal 11. The management threshold value is, for example, the number of consecutive failures in code generation (including the transmission of user codes) or settlement process in response to a code processing request transmitted from the manager terminal 11. In this case, as part of multiple users, the user database includes multiple managers (managers of system 100). Also, as part of multiple user terminals 11, the user database includes multiple manager terminals 11 that are used by the managers.

In this example, when a manager activates the payment application using a manager terminal 11 registered in advance in the database 34, it is identified during the user authentication in step S32 that the code request was transmitted by the manager terminal 11. As a result, the manager terminal 11 is subject to a management switching condition that is based on a management threshold value that is different from general threshold values (e.g., the threshold values shown in Fig. 3), which are applied to other general user terminals 11.

The manager may periodically or irregularly test the active system 30 for abnormalities by, for example, sending a code request using the manager terminal 11. Such tests can also be conducted by causing a robot to operate the manager terminal 11 (e.g., turning on the reload button for the user code 12 a specified number of times). By conducting such tests in an environment where the communication state is stable, errors in the system 30 can be detected more accurately.

The management threshold value may be set under stricter conditions compared to general threshold values. For example, regardless of which step in the series of processes caused the error, the management threshold value may be set to ten times, five times, or three times as the consecutive failures in code-based payments. When the management threshold value is set to three consecutive failures, the system may promptly execute system switching after three consecutive failures in code-based payments.

Some of the multiple managers may be registered as designated managers in the user database. In addition, or instead, some of the multiple manager terminals 11 may be registered in the user database as designated terminals 11. Further, even while the active system 30 is operating without any failures, when a designated manager or a designated terminal 11 is identified, the system 100 may exceptionally transmit an emergency code to the designated terminal 11. In this case, whether the code request has been sent by the manager may be identified by the user router 102 or by another authenticator.

### System Switching Method

The method for switching between the systems 30, 40, and 50 based on error information will now be described with reference to Fig. 4. While the following illustrates a switch from the active system 30 to the first standby system 40, a switch from the first standby system 40 to the second standby system 50 can be performed in the same manner. The switcher 101 may repeatedly execute steps S41 to S44, which will be described below, at a specified interval.

Prior to step S41, the error information collector 104 continuously gathers error information from the active system 30. Then, in step S41, the switcher 101 obtains the error information that the error information collector 104 has collected. Next, in step S42, the switcher 101 obtains a switching condition that is based on the error information. For example, the switcher 101 obtains the switching threshold value used for code generation in a case in which a code generation error has occurred, obtains the management threshold value in a case in which an error has occurred in a code processing request from the manager terminal 11, and obtains the switching threshold value used for the current time of day in a case in which an authentication error has occurred.

Subsequently, in step S43, the switcher 101 determines whether the number of errors included in the error information is greater than the corresponding switching threshold value. When the number of errors is greater than the switching threshold value, the switcher 101 proceeds to step S44 to switch from the active system 30 to the first standby system 40. Specifically, the switcher 101 changes, from the active system 30 to the first standby system 40, the transmission destination of the code request received by the user router 102 from the user terminal 11. When the number of errors is not greater than the switching threshold value, the switcher 101 terminates the process without switching between the systems.

### Operation of Present Disclosure

In a case in which the error information in the first standby system 40 satisfies the specified switching condition, a failure that repeatedly causes errors has occurred in the first standby system 40. Thus, the switcher 101 switches the system executing the first code processing (generation and transmission of the user code 12) from the active system 30 to the first standby system 40. Similarly, when the error information in the first standby system 40 satisfies the specified switching condition, the switcher 101 changes the system executing the first code processing from the first standby system 40 to the second standby system 50. As a result, the code processing system 100 is configured to transmit either the active (normal) system code or the standby (emergency) system code to the user terminal 11 based on the error information in the active system 30.

The user code 12 includes a system code unique to each of the systems 30, 40, and 50 in a specified digit. Thus, in the store-scan method, after receiving a settlement request transmitted from the merchant terminal 20, the merchant router 103 can transmit the settlement request to the system that has generated the user code 12 based on the system code of the user code 12 included in the settlement request.

Specifically, the code processing system 100, upon receiving a second code processing request (settlement request) including a normal code, transmits the second code processing request to the active system 30 to execute the second code processing (code comparison and settlement process). Further, upon receiving the second code processing request including an emergency code, the code processing system 100 transmits the second code processing request to the first standby system 40 to execute code processing.

For example, the merchant router 103 transmits a settlement request to the active system 30 when the user code 12 is an active system code, transmits a settlement request to the first standby system 40 when the user code 12 is a first standby system code, and transmits a settlement request to the second standby system 50 when the user code 12 is a second standby system code. Each of the systems 30, 40, and 50 is configured to execute comparison between user codes 12 and the settlement process upon receiving the corresponding settlement request.

Thus, in the event of a failure in the active system 30, the standby system 40 or 50 operates instead. Even in the event of a failure in any one of the systems 30, 40, or 50, redundantly configuring the code processing system 100 with multiple systems 30, 40, and 50 minimizes the downtime of the code processing system 100. This improves the availability of services using identification codes.

### Advantages of Present Disclosure

The present disclosure has the following advantages.
(1) The code processing system 100 transmits either an active system code or a standby system code to the user terminal 11 based on the error information in the active system 30. This allows the code processing system 100 to correctly execute code processing even when switching between multiple systems 30 and 40.
(2) A user code 12 includes a system code unique to each of the systems 30, 40, and 50, which is unique to that user code 12, in a specified digit. This allows the merchant router 103 to identify the system that has generated the user code 12, based on the system code. As a result, the merchant router 103 transmits a settlement request to the currently-operating system.
(3) Each of the systems 30, 40, and 50 executes, upon receiving the second code processing request (settlement request), the process that compares the user code 12 included in the settlement request with a transmitted user code 12 stored in the code database. Such a configuration allows the system 30, 40, or 50 that has generated the user code 12 to execute the settlement process using the user code 12. This allows for switching of the system that executes the second code processing in conjunction with switching the system that issues the user code 12.
(4) If multiple errors occur during the code generation process, the system executing that process is likely to have experienced a failure. This allows the number of code generation errors to be used as a condition for switching.
(5) If multiple errors occur during the user authentication process, the system executing that process is likely to have experienced a failure. This allows the number of authentication errors to be used as a condition for switching.
(6) If multiple errors occur during the settlement process, the system executing that process is likely to have experienced a failure. This allows the number of settlement errors to be used as a condition for switching.
(7) The number of processing requests for the system 100 differs depending on the time of day. Accordingly, the impact, urgency, or significance of the occurrence of an error varies depending on the time of day. Further, depending on the time of day, network congestion may occur, leading to frequent errors; however, such congestion may also be temporary. Thus, the optimal threshold value for the number of errors that should trigger switching between the systems 30, 40, and 50 varies depending on the time of day. As a result, setting different threshold values depending on the time of day allows the system 100 to be operated more effectively.
(8) When switching between the systems 30 and 40 is executed based on error information, the system 30 that is currently operating is permitted to operate with errors less than a threshold value. To solve this problem, the manager threshold value is set for an error that has occurred due to a code processing request issued by the manager terminal 11. This allows for prompt switching between the systems 30 and 40 without permitting an error until the general threshold value is reached.
(9) Redundantly configuring the system 100 with one or more standby systems 40 and 50 improves the availability of the system 100 but also results in increased costs. To solve this problem, the standby systems 40 and 50 are designed to provide only one of the services offered by the active system 30 (the first settlement process and the second settlement process); specifically, the one with higher importance or usage frequency (the first settlement process, e.g., code-based payment via the store-scan method). This limits an increase in cost.
(10) Even while the active system 30 is operating without any failures, the system 100 can transmit an emergency code to the designated manager (designated terminal 11), allowing the designated manager to perform an operational check of the standby systems 40 and 50 using the emergency code. Alternatively, when introducing a new standby system, the designated manager can perform an operational check of the new standby system using an exceptionally generated emergency code.
(11) The switcher 101 determines whether an error that satisfies the switching condition has occurred based on the switching condition and the error information collected by the error information collector 104. The switching condition is stored in the databases 34, 44, and 54, and the error information is recorded by the error information collector 104. Thus, distributing the storage of the switching condition and error information eliminates single points of failure that could lead to a shutdown of the entire system 100.
(12) The switcher 101 specifies whether the user router 102 transmits a code request to the system 30, 40, or 50. Thus, the switcher 101 selectively specifies the transmission destination of the code request, thereby avoiding duplication in the issuance of the user code 12.
(13) The code processing system 100 provides electronic payment services, enabling the correct execution of code processing in code-based payments.

The present embodiment may be modified as follows. The present embodiment and the following modifications can be combined as long as they remain technically consistent with each other.

### First Modification

In the above-described embodiment, an active-standby configuration is employed. Specifically, one of the three systems 30, 40, and 50 serves as the active system 30, and the standby systems 40 and 50 take over processing in the event of a failure in the active system 30. Instead, the system and method of the present disclosure may have an active-active configuration, in which all systems 30, 40, and 50 operate simultaneously.

### Second Modification

The code processing system 100 does not have to include the second standby system 50, or may include three or more standby systems.

### Third Modification

The code processing system 100 may be employed not only for code-based payments but also for other services that use identification codes. For example, a coupon with an identification code may be issued on an EC site, allowing users to receive the benefits of the coupon based on the identification code. Alternatively, electronic tickets with identification codes may be issued so that entry management are performed using those identification codes.

### Fourth Modification

The switcher 101 may be configured not only to switch the transmission destination of a code request to the user router 102 but also to switch the transmission destination of a settlement request to the user router 102 and the merchant router 103. In this case, the standby systems 40 and 50, which have been switched from the active systems 30 and 40, respectively, are configured to execute the received code processing (settlement process) regardless of the system code. Particularly, such a configuration is advantageous when there is a relatively long time interval between the first code processing (transmission of the user code 12) and the second code processing (comparison of codes).

### Clauses

Concepts that can be understood from each of the above-described embodiment and modifications will now be described.

### [Clause 1]

A code processing system, including:
an active system; and
a standby system, where
each of the active system and the standby system is configured to generate a multi-digit identification code upon receiving a code request from a user terminal, the identification code including, in a specified digit, a system code unique to a system that generates the identification code,
the identification code generated by the active system is an active system code,
the identification code generated by the standby system is a standby system code, and
the code processing system is configured to transmit either the active system code or the standby system code to the user terminal based on error information in the active system.

### [Clause 2]

The code processing system according to clause 1, where
the code processing system is configured to execute code processing associated with electronic payment executed via the user terminal and a merchant terminal,
the merchant terminal is configured to transmit, to the code processing system, a settlement request that includes the identification code obtained from the user terminal,
the code processing system comprises a merchant router configured to receive the settlement request transmitted from the merchant terminal, and
the merchant router is configured to transmit the settlement request to the active system when the identification code is the active system code and transmit the settlement request to the standby system when the identification code is the standby system code.

### [Clause 3]

The code processing system according to clause 1 or 2, including a database configured to store a transmission history of the identification code, wherein
the code processing system is configured to, upon receiving a code processing request including the identification code, transmit the code processing request to the active system when the identification code is the active system code and transmit the code processing request to the standby system when the identification code is the standby system code, and
each of the active system and the standby system is configured to execute a comparison process between an identification code included in the code processing request and a transmitted identification code stored in the database upon receiving the code processing request.

### [Clause 4]

The code processing system according to any one of clauses 1 to 3, where
the error information includes the number of generation errors that occur during a code generation process that generates the identification code.

### [Clause 5]

The code processing system according to any one of clauses 1 to 4, including a database configured to store information related to a user who uses the user terminal, where
each of the active system and the standby system is configured to execute an authentication process for the user with reference to the database upon receiving a code request from the user terminal and generate the identification code upon completing the authentication process, and
the error information includes the number of authentication errors that occur during the authentication process.

### [Clause 6]

The code processing system according to any one of clauses 1 to 5, where
each of the active system and the standby system is configured to execute a settlement process upon receiving a settlement request that includes the identification code, and
the error information includes the number of settlement errors that occur during the settlement process.

### [Clause 7]

The code processing system according to any one of clauses 1 to 6, where
the error information includes the number of times an error has occurred,
the code processing system is configured to transmit either the active system code or the standby system code to the user terminal based on threshold values for the number of times the error has occurred, and
the threshold values are each set for a different time of day.

### [Clause 8]

The code processing system according to any one of clauses 1 to 7, including a database that stores information related to user terminals, where
the user terminals include one or more manager terminals used by a manager of the code processing system,
the error information includes the number of times an error has occurred,
the code processing system is configured to transmit either the active system code or the standby system code to the user terminal based on threshold values for the number of times the error has occurred, and
the threshold values include one or more management threshold values, the management threshold values being the number of times the error has occurred during a series of processes associated with a request from the manager terminals.

### [Clause 9]

The code processing system according to any one of clauses 1 to 8, where
the code processing system is configured to execute code processing associated with electronic payment,
a payment process executed in response to a settlement request transmitted from a merchant terminal receiving a payment via the electronic payment is referred to as a first settlement process,
a payment process executed in response to a settlement request transmitted from the user terminal making a payment via the electronic payment is referred to as a second settlement process,
each of the active system and the standby system is configured to execute a settlement process upon receiving the settlement request,
the active system is capable of executing the first settlement process and the second settlement process, and
the standby system is capable of executing the first settlement process and is incapable of executing the second settlement process.

### [Clause 10]

The code processing system according to any one of clauses 1 to 9, including a database configured to store information related to users, where the users include a manager of the code processing system, and
the code processing system is configured to transmit the standby system code to the user terminal used by the manager upon receiving a code request from the manager when the active system is operating.

### [Clause 11]

The code processing system according to any one of clauses 1 to 10, including:
a switcher configured to switch between the active system and the standby system;
a database configured to store a switching condition for executing the switch; and
an error information collector configured to collect the error information, wherein
the switcher is configured to switch the active system to the standby system based on the switching condition and the error information collected by the error information collector in a case in which an error that satisfies the switching condition has occurred.

### [Clause 12]

The code processing system according to any one of clauses 1 to 11, including:
a switcher configured to switch between the active system and the standby system;
a user router configured to receive the code request from the user terminal and transmit the received code request to either the active system or the standby system, wherein
the switcher is configured to specify whether the user router transmits the code request to the active system or the standby system.

### [Clause 13]

The code processing system according to any one of clauses 1 to 12, where
the code processing system is configured to provide an electronic payment service,
each of the active system and the one or more standby systems includes:
   an authenticator configured to execute an authentication process for a user who uses the user terminal;
   a configuration device configured to obtain a payment method that has been set by the user;
   a code generator configured to generate the identification code in response to the code request; and
   a settlement processing device configured to execute a settlement process upon receiving a settlement request, and
the payment method includes at least one of a credit card, a bank account, and electronic money.

### [Clause 14]

A code processing system, including:
an active system;
one or more standby systems; and
a database, wherein
each of the active system and the one or more standby systems is configured to generate a multi-digit identification code upon receiving a code request from a user terminal,
the identification code includes, in a specified digit, a system code unique to each of the active system and the one or more standby systems generating the identification code,
the database is configured to store a transmission history of the identification code generated by each of the active system and the one or more standby systems,
the code processing system is configured to:
   transmit, to the user terminal, the identification code generated by either the active system or one of the one or more standby system, based on error information in the active system;
   upon receiving a code processing request including the identification code, transmit the code processing request to a system, among the active system and the one or more standby systems, corresponding to the system code included in the identification code, and
each of the active system and the one or more standby systems is configured to execute a comparison process between an identification code included in the code processing request and an identification code stored in the database upon receiving the code processing request.

### [Clause 15]

A code processing method for a code processing system that includes an active system and one or more standby systems, each of the active system and the one or more standby systems being configured to generate a multi-digit identification code, and the identification code including, in a specified digit, a system code unique to each of the active system and the one or more standby system, the method including:
collecting error information in the active system;
receiving a code request from the user terminal; and
transmitting, to the user terminal, the identification code generated by either the active system or one of the one or more standby system, based on error information in the active system.

## Claims

1. A code processing system, comprising:
an active system; and
a standby system, wherein
each of the active system and the standby system is configured to generate a multi-digit identification code upon receiving a code request from a user terminal, the identification code including, in a specified digit, a system code unique to a system that generates the identification code,
the identification code generated by the active system is an active system code,
the identification code generated by the standby system is a standby system code, and
the code processing system is configured to transmit either the active system code or the standby system code to the user terminal based on error information in the active system.

2. The code processing system according to claim 1, wherein
the code processing system is configured to execute code processing associated with electronic payment executed via the user terminal and a merchant terminal,
the merchant terminal is configured to transmit, to the code processing system, a settlement request that includes the identification code obtained from the user terminal,
the code processing system comprises a merchant router configured to receive the settlement request transmitted from the merchant terminal, and
the merchant router is configured to transmit the settlement request to the active system when the identification code is the active system code and transmit the settlement request to the standby system when the identification code is the standby system code.

3. The code processing system according to claim 1 or 2, comprising a database configured to store a transmission history of the identification code, wherein
the code processing system is configured to, upon receiving a code processing request including the identification code, transmit the code processing request to the active system when the identification code is the active system code and transmit the code processing request to the standby system when the identification code is the standby system code, and
each of the active system and the standby system is configured to execute a comparison process between an identification code included in the code processing request and a transmitted identification code stored in the database upon receiving the code processing request.

4. The code processing system according to any one of claims 1 to 3, wherein
the error information includes the number of generation errors that occur during a code generation process that generates the identification code.

5. The code processing system according to any one of claims 1 to 4, comprising a database configured to store information related to a user who uses the user terminal, wherein
each of the active system and the standby system is configured to execute an authentication process for the user with reference to the database upon receiving a code request from the user terminal and generate the identification code upon completing the authentication process, and
the error information includes the number of authentication errors that occur during the authentication process.

6. The code processing system according to any one of claims 1 to 5, wherein
each of the active system and the standby system is configured to execute a settlement process upon receiving a settlement request that includes the identification code, and
the error information includes the number of settlement errors that occur during the settlement process.

7. The code processing system according to any one of claims 1 to 6, wherein
the error information includes the number of times an error has occurred,
the code processing system is configured to transmit either the active system code or the standby system code to the user terminal based on threshold values for the number of times the error has occurred, and
the threshold values are each set for a different time of day.

8. The code processing system according to any one of claims 1 to 7, comprising a database that stores information related to user terminals, wherein
the user terminals include one or more manager terminals used by a manager of the code processing system,
the error information includes the number of times an error has occurred,
the code processing system is configured to transmit either the active system code or the standby system code to the user terminal based on threshold values for the number of times the error has occurred, and
the threshold values include one or more management threshold values, the management threshold values being the number of times the error has occurred during a series of processes associated with a request from the manager terminals.

9. The code processing system according to any one of claims 1 to 8, wherein
the code processing system is configured to execute code processing associated with electronic payment,
a payment process executed in response to a settlement request transmitted from a merchant terminal receiving a payment via the electronic payment is referred to as a first settlement process,
a payment process executed in response to a settlement request transmitted from the user terminal making a payment via the electronic payment is referred to as a second settlement process,
each of the active system and the standby system is configured to execute a settlement process upon receiving the settlement request,
the active system is capable of executing the first settlement process and the second settlement process, and
the standby system is capable of executing the first settlement process and is incapable of executing the second settlement process.

10. The code processing system according to any one of claims 1 to 9, comprising a database configured to store information related to users, wherein
the users include a manager of the code processing system, and the code processing system is configured to transmit the standby system code to the user terminal used by the manager upon receiving a code request from the manager when the active system is operating.

11. The code processing system according to any one of claims 1 to 10, comprising:
a switcher configured to switch between the active system and the standby system;
a database configured to store a switching condition for executing the switch; and
an error information collector configured to collect the error information, wherein
the switcher is configured to switch the active system to the standby system based on the switching condition and the error information collected by the error information collector in a case in which an error that satisfies the switching condition has occurred.

12. The code processing system according to any one of claims 1 to 11, comprising:
a switcher configured to switch between the active system and the standby system;
a user router configured to receive the code request from the user terminal and transmit the received code request to either the active system or the standby system, wherein
the switcher is configured to specify whether the user router transmits the code request to the active system or the standby system.

13. The code processing system according to any one of claims 1 to 12, wherein
the code processing system is configured to provide an electronic payment service,
each of the active system and the one or more standby systems includes:
an authenticator configured to execute an authentication process for a user who uses the user terminal;
a configuration device configured to obtain a payment method that has been set by the user;
a code generator configured to generate the identification code in response to the code request; and
a settlement processing device configured to execute a settlement process upon receiving a settlement request, and
the payment method includes at least one of a credit card, a bank account, and electronic money.

14. A code processing system, comprising:
an active system;
one or more standby systems; and
a database, wherein
each of the active system and the one or more standby systems is configured to generate a multi-digit identification code upon receiving a code request from a user terminal,
the identification code includes, in a specified digit, a system code unique to each of the active system and the one or more standby systems generating the identification code,
the database is configured to store a transmission history of the identification code generated by each of the active system and the one or more standby systems,
the code processing system is configured to:
transmit, to the user terminal, the identification code generated by either the active system or one of the one or more standby system, based on error information in the active system;
upon receiving a code processing request including the identification code, transmit the code processing request to a system, among the active system and the one or more standby systems, corresponding to the system code included in the identification code, and
each of the active system and the one or more standby systems is configured to execute a comparison process between an identification code included in the code processing request and an identification code stored in the database upon receiving the code processing request.

15. A code processing method for a code processing system that includes an active system and one or more standby systems, each of the active system and the one or more standby systems being configured to generate a multi-digit identification code, and the identification code including, in a specified digit, a system code unique to each of the active system and the one or more standby system, the method comprising:
collecting error information in the active system;
receiving a code request from the user terminal; and
transmitting, to the user terminal, the identification code generated by either the active system or one of the one or more standby system, based on error information in the active system.
